(19) Europäisches Patentamt / European Patent Office / Office européen des brevets

(11) **EP 4 007 887 B1**

(12) **EUROPEAN PATENT SPECIFICATION**

(45) Date of publication and mention
of the grant of the patent:
**19.06.2024 Bulletin 2024/25**

(21) Application number: **20758349.3**

(22) Date of filing: **31.07.2020**

(51) International Patent Classification (IPC):
**G01B 11/12** $^{(2006.01)}$ **G01B 11/10** $^{(2006.01)}$
**G01B 11/06** $^{(2006.01)}$

(52) Cooperative Patent Classification (CPC):
**G01B 11/12; G01B 11/0691; G01B 11/105**

(86) International application number:
**PCT/IB2020/057251**

(87) International publication number:
**WO 2021/024127 (11.02.2021 Gazette 2021/06)**

(54) **APPARATUS AND METHOD OF MEASURING THE INNER DIAMETER OF A TUBE ALONG THE RESPECTIVE PRODUCTION LINE**

VORRICHTUNG UND VERFAHREN ZUR MESSUNG DES INNENDURCHMESSERS EINES ROHRES ENTLANG DER JEWEILIGEN PRODUKTIONSLINIE

APPAREIL ET PROCÉDÉ DE MESURE DU DIAMÈTRE INTERNE D'UN TUBE LE LONG DE LA LIGNE DE PRODUCTION RESPECTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2019 IT 201900013845**

(43) Date of publication of application:
**08.06.2022 Bulletin 2022/23**

(73) Proprietor: **Nirox S.r.l.**
**25080 Mazzano (BS) (IT)**

(72) Inventors:
• **BANDERA, Andrea**
**25080 Mazzano (BS) (IT)**

• **DONINI, Maurizio**
**25080 Mazzano (BS) (IT)**
• **PASQUALI, Andrea**
**25080 Mazzano (BS) (IT)**

(74) Representative: **Biesse S.r.l.**
**Via Corfù, 71**
**25124 Brescia (IT)**

(56) References cited:
**WO-A1-2019/069846      JP-A- 2000 171 231**
**US-A1- 2015 204 654      US-A1- 2019 162 524**

## Description

## Field of the invention

In its most general aspect, the present invention finds its use in the context of the quality controls, in particular dimensional controls, of tubular products along the respective automatic production lines.

More in detail, the invention concerns an apparatus and method of measuring the inner diameter of tubes made of plastic or glass material or anyhow of a transparent or semitransparent material, preferably moving along the respective production line.

## State of the art

In various sectors, among which that of transparent or semitransparent tubes made of glass, plastic or other material for pharmaceutical use, the inner diameter plays an essential role. In particular, such dimension is especially relevant for those tubes of dimensions suitable for being used for the production of syringes and carpules. In fact, for such type of end product, the inner diameter determines the volume and, consequently, the amount of drug contained therein. Specifically, since these amounts are often quite small, even a small variation in diameter can be extremely relevant in determining an incorrect dosage of the drug.

To date, the market trend is to carry out a check understood as a measure and selection of all tubes produced, with the consequent discarding of tubes that are out of tolerance. Specifically, the tubes are inspected to check their outer diameter, their ovality, the thickness of the wall and the concentricity of the outer surface with respect to the inner one.

The inner diameter can be checked substantially according to three different modalities which consist in setting very tight tolerance limits on the primary outer-diameter and thickness measures, or in a process control by means of laboratory measures, or even in a calculation of the inner diameter, by combining the thickness and outer diameter data deriving from sensors installed on the lines. However, such sensors are independent of one another and measure in different points and times and thus in different conditions.

The first method is not very efficient since it involves high amounts of waste; in fact, very tight tolerances on the outer diameter and the thickness can also determine the discarding of good products; the second does not ensure the checking of 100% of the tubular element products, the check being carried out outside the line; and the third, which is the only one currently used on the line, suffers from limitations due to the fact that the outer-diameter and thickness measures are difficult to superimpose in space and time and this can have negative impact on the reliability of the results achieved since the data obtained is not a direct measure, but is calculated from those two values which are not, however, correlated to one another and which can lead to unacceptable tolerances in some sectors or for some products, such as the ones mentioned above.

It would thus be desirable to be able to accurately and reliably detect the measure of the inner diameter of the glass tube immediately downstream of its molding, possibly by means of non-invasive and "non-contact" techniques to avoid breakage by thermal shock, and so that to be able to intervene upstream in real time and to correct any defect, thus limiting the discarding of product to the minimum, and especially the risks in terms of quality. In fact, by carrying out an accurate measurement of the inner diameter of the tube, it is then possible to feedback intervene on the molding step to correct any anomalies or to anyhow proceed to the discarding of the tubes or tube lengths which may result to be non-compliant.

Among the measurement systems for measuring the dimensional characteristics of tubes, two types of sensors which could be used to measure the inner diameter of a tube are known. Specifically, they are:

A. Confocal optical sensors with chromatic dispersion, able to measure the distance and thickness of transparent and semitransparent objects and which have a measurement range that can reach several millimeters;

B. Interferometric sensors for measuring layers, able to measure the distance and thickness of transparent and semitransparent objects. Such sensors also have a measurement range that can reach several millimeters, which makes them appropriate for simultaneously reading both the tube walls.

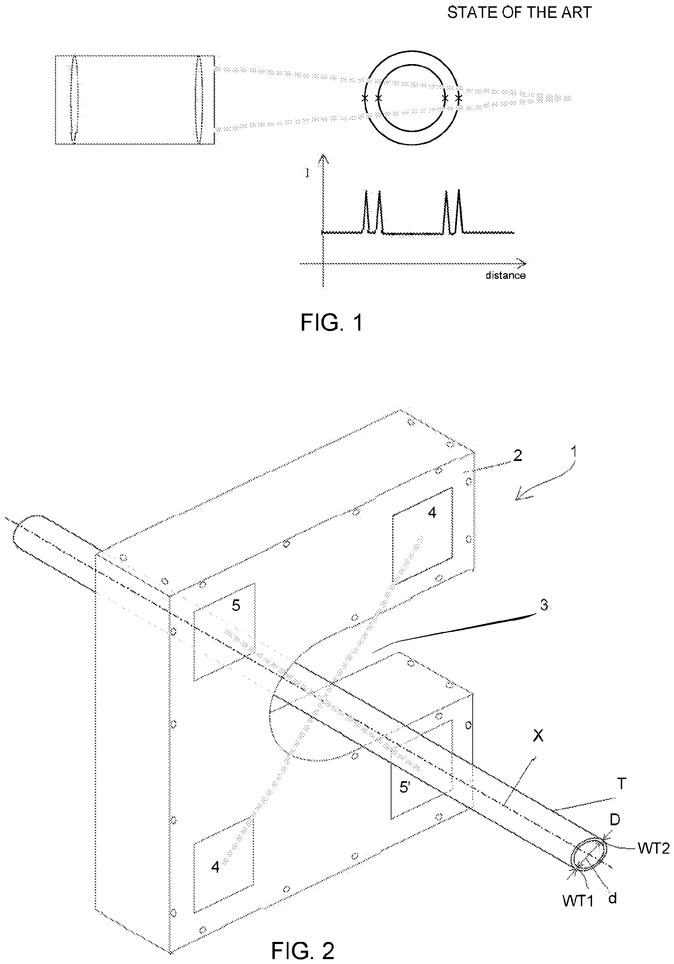

Figure 1 shows the idea of using the sensors mentioned above. In both cases, it is provided to send a light beam onto the object at its diameter and to collect the reflected radiation. More precisely, the reflection is used by taking into account that both the outer surface and the inner surface of the tube determine a reflected component. This way, the light beam reflected by the tube derives from the superposition of four waves phased shifted between one another, reflected respectively by a first outer surface, a first inner surface, a second inner surface and a second outer surface of the object. Such superposition determines peaks of intensity of the light beam reflected, each corresponding to one of the aforesaid surfaces. By examining the distance between such peaks, it is possible to determine both the distance between the outer and inner surfaces, thus the thickness of the tube, and the diameters, and specifically the inner diameter of the tube.

Thus, in theory, both types would be able to carry out a direct measure of the inner diameter. However, the type A sensors use optical heads with a very high numerical aperture, which makes them inadequate for measuring objects with circular section, such as tubes. In fact, the very high numerical aperture creates distorted reflections when the optical head is not perfectly in-line with the tube, thus causing very high measurement errors. In a production line, it is practically impossible that a tube is always perfectly in-line with the optical head due to the vibrations caused by the speed and, consequently, such sensors are not usable for the desired purpose. Moreover, the measuring accuracy of such sensors typically decreases as the measurement range, intended as the distance measuring range, increases. In particular, in case of pharmaceutical tubes, the outer diameters are typically up to 35 mm, whereby the measurement error, which is reflected in the position of the individual peaks, would be very high.

The type B sensors can reach high measurement ranges, while maintaining the required accuracy, but they are based on a measurement principle with a measuring frequency that makes them vulnerable to vibrations. Thus, such an approach is not very adapted for a measurement to be carried out in a production line of tubes, in which line the tubes are moving and thus subjected to vibrations and lateral displacements. In particular, such measurement system is not very adapted for measuring tubes with small outer diameters, such as those necessary for producing syringes and the like, and for which it is essential to have a tool with high tolerance against vibrations.

The document US 2019/162524 concerns a measurement system which includes a micrometric assembly for receiving a tube and comprising a plurality of non-contact optical micrometers arranged around the length of the tube for measuring an outer diameter in a first plurality of positions along a circumference of the tube. The measurement system can further include a set of gauges comprising a plurality of non-contact gauges arranged around the tube for measuring a wall thickness in a second plurality of positions along the circumference of the tube. A controller receives the diameter measures and the thickness measures and determines an inner diameter. Disadvantageously, according to this system, the outer diameter and thickness measures are carried out in two different tube sections distant from one another. This method is thus not accurate since it hypothesizes that the tube is not susceptible to rotations and oscillations during its advance. Thus, the inner diameter is deduced indirectly and cannot be considered an effective measure.

The document US 2015/204654 concerns an apparatus and a method of measuring the thickness of a wall of a transparent object.

The document JP 2000 171231 concerns an apparatus for measuring the shape of a tube, by measuring respectively an outer diameter by means of an optical device for measuring the outer diameter and a couple of thicknesses by means of an ultrasonic thickness gauge at a plurality of rotation angles and by subtracting a total of the couple of thicknesses from the outer diameter, measured with the same rotation angle to obtain an inner diameter. The steel tube is thus mounted on a rotation mechanism of the tube, comprising a detector of the rotation angle, so that an outer diameter of the steel tube is measured at each predetermined angle. At the same time, a couple of thicknesses of the steel tube are measured by the ultrasonic thickness gauge. The outer diameters and thicknesses measured for each rotation angle are processed to calculate the inner diameter of the tube. Disadvantageously, such an apparatus and the respective method are not appropriate for carrying out measures directly in a production line, but only work in static or laboratory conditions, since the tube must be put in rotation.

Thus, no measuring technology is currently able to carry out a direct measure of the inner diameter of a tubular element in relative motion with respect to the system for measuring in a longitudinal direction coincident or anyhow substantially parallel to the longitudinal axis of the tube in a production line.

Thus, to date, the need to directly measure the inner diameter accurately, reliably, quickly and in the production line is still very strong and still has to be satisfied.

## Objects and summary of the invention

Object of the present invention is thus to provide an apparatus and a method to carry out dimensional measures, in particular of the inner diameter of a transparent or semitransparent moving tube.

In particular, object of the present invention is to provide an apparatus, and the corresponding method, to carry out dimensional measures starting from the thickness and outer diameter measures of a transparent or semitransparent tube.

Such objects are achieved with a measuring apparatus for measuring the inner diameter of a transparent or semitransparent tube moving in a longitudinal direction with respect to the measuring apparatus itself, according to claim 1.

In particular, the measuring apparatus comprises at least one optical measure sensor for measuring the outer diameter of the tube at a tube section, combined with one, but preferably with two optical measure sensors for measuring the thickness of the tube at said tube section and at the same instant. Since the measurements are carried out simultaneously and on the same tube section, the inner diameter corresponds to the difference between the outer diameter and the two thicknesses. The value obtained is thus a measure since it is obtained in the same space and time conditions. In fact, a measurement carried out this way is immune to the vibrations which the tube is subjected to since it derives from three measures carried out contemporaneously with the tube in the same conditions.

Advantageously, the tube can be translated longitudinally with respect to the measuring apparatus, or can be stationary and the measuring apparatus can be translatable longitudinally with respect to the tube. This way and advantageously, all different tube sections are consecutively found at the measure sensors for measuring the outer diameter and the thickness. Thus, by repeating the measurement at regular time intervals, it is possible to measure the outer diameter, the thickness and the inner diameter at a plurality of different tube sections.

Moreover, the tube could also be susceptible to rotary motion, for measuring the diameter and thickness of the tube at different angles, or also at different sections, in addition to moving in longitudinal direction with respect to the measuring apparatus or to being stationary, but with the measuring apparatus moving in longitudinal direction with respect to it.

Preferably, the thickness and diameter measure sensors are carried by a single body or supported so that to be integral with one another.

Advantageously, movement means are combined with the measuring apparatus for a translation of at least the thickness and diameter measure sensors in longitudinal direction with respect to the tube to be measured.

Preferably, the apparatus comprises or is combined with analyzing means provided with program means to calculate the thickness depending on the values detected by the measure sensors.

Preferably, two respective thickness measure sensors are combined with each diameter measure sensor and, even more preferably, a single diameter measure sensor and two respective thickness measure sensors are combined with the same supporting body.

Advantageously, the supporting body has an opening through which the tube slides, the opening preferably being a through opening to allow the insertion of the tube from a side of the body.

Preferably, the supporting body is combined with a frame in order to be positioned so that the axis of the through hole coincides with the geometric axis of the tube and to be able to be rotated around the axis of the hole to tilt the sensors carried by it of a desired angle with respect to the tube.

Advantageously, each thickness measure sensor is an optical sensor of the interferometric type, comprising an emitter to emit a light radiation source and a receiver to collect the light radiation coming out of the tube and resulting from the radiation reflected from the outer and inner tube walls, and each diameter measure sensor is a shadow projection sensor, selected in the group comprising the laser gauges, gauges with telecentric optics and the like and comprising a transmitter element adapted to direct a light beam on the tube and a receiver element arranged on the opposite part of the supporting body with respect to the tube, in order to determine the outer diameter of the tube depending on the shadow projected by the tube when struck with the light beam.

Preferably, there are two thickness measure sensors mounted on opposite parts of the tube and aligned along the axis of the tube section comprising the diameter to be measured, whereas the transmitter element and the receiver element of the diameter measure sensor are mounted on opposite parts of the tube and aligned to one another along a respective axis orthogonal to the axis of the tube section comprising the diameter to be measured. In other words, the diameter measure sensor is arranged orthogonally to the axis that connects the two thickness measure sensors.

In a further aspect, the invention concerns a method according to claim 9 of measuring the inner diameter of a tube moving along the respective geometric axis which provides to combine at least one optical sensor with the tube for measuring the thickness of at least one tube wall and at least one optical measure sensor for measuring the diameter of the tube; measuring the outer diameter of the tube at least at a section thereof and contemporaneously measuring the thickness of the tube at least at a tube section on which the outer diameter of the tube measured by means of the diameter measure sensor lies; and calculating the inner diameter of the tube as the difference between the outer diameter and the thickness of the tube.

Preferably, the method provides to prearrange two thickness measure sensors for each outer-diameter measure sensor for measuring the two thicknesses of the tube walls at the diameter measured by the diameter measure sensor, so that the measure of the inner diameter of the tube is obtained by subtracting the measure of the two corresponding thicknesses from the measure of the outer diameter.

Preferably, the method provides to translate the tube in a longitudinal direction, or to translate the diameter and thickness measure sensors in longitudinal direction.

In a preferred solution, the method further provides to rotate the tube on its longitudinal axis for measuring the inner and outer diameters and the thickness of the wall with the tube arranged at different angles.

Advantageously, the method provides to direct two respective light radiation on the tube, by means of two respective interferometric sensors arranged aligned to one another on opposite parts of the tube, and to collect the radiation emitted by the tube, by means of said two interferometric sensors, in order to measure the thickness of the tube walls, and to measure the outer diameter of the tube by analyzing the shadow projected by the tube itself on a receiver element when struck by the light emitted by a transmitter element of a shadow projection sensor appropriately prearranged and selected between laser gauges, gauges with telecentric optics and the like.

The method provides to detect a plurality of thickness and diameter measures for each tube length and to compare them with given threshold values in order to determine from time to time whether the tube is compliant or not.

The method can further provide to detect the inner diameter of the tube on different sections, by prearranging a plurality of diameter measure sensors and respective measure sensors arranged around the tube at different angles and combined with the same body or with different supporting bodies aligned along the longitudinal axis of the tube.

## Brief description of the figures

Further characteristics and advantages of the invention will be better highlighted in the following detailed description of some preferred, but not exclusive, embodiments illustrated by way of example, and without limitations, in the accompanying drawings, in which:

- figure 1 schematically shows the operation of the measure sensors according to the known art;
- figure 2 schematically shows an embodiment of a detection apparatus for measuring the inner diameter of elongated tubular elements according to the present invention; and

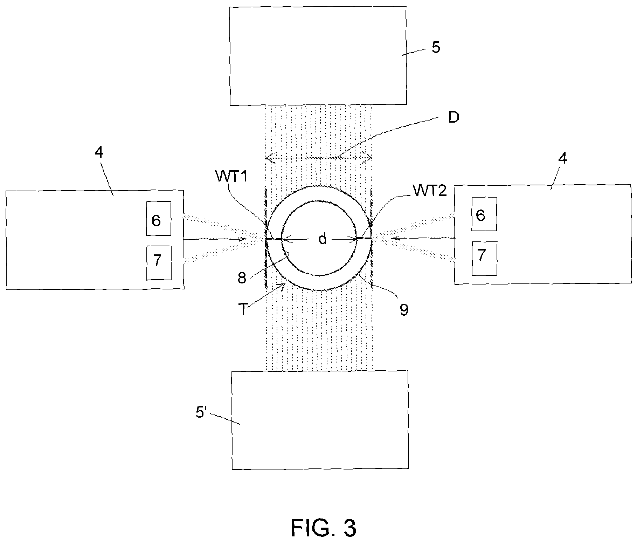

- figure 3 schematically shows the main components of the detection apparatus of figure 2.

## Detailed description of the invention

With reference to the aforesaid figures, **1** generally denotes a detection apparatus according to the present invention, positionable downstream of an automatic production line for producing a tube **T** of a transparent or semitransparent material, such as glass or of a plastic material, for example PVC, PU, PE, PP, PC, PA, PMMA, PSU, PBT, LCP, PLG, PEEK, FEP, ETFE, PVDF.

The tube is kept in motion along its geometric axis **X**, i.e. along the longitudinal axis.

The detection apparatus **1** is an optical apparatus for non-contact dimensional measuring, for measuring the outer diameter, the thickness of at least one wall of a cross-section of the tube and in particular the inner diameter **d** of the tube **T**.

The apparatus comprises a supporting body **2** which can be combined with a frame - not shown - for its positioning with respect to the tube **T.**

The supporting body **2** is substantially horseshoe-shaped, in the sense that it extends around a hole or through opening **3** inside which the tube **T** is intended to be inserted in translatory motion in the longitudinal direction **X.** As an alternative, the tube **T** can be stationary and the supporting body can be provided with movement means for its translation in the longitudinal direction **X**.

Moreover, the apparatus could comprise means for causing a rotation of the tube on its longitudinal axis.

As an alternative, and in particular when the tube **T** is made of plastic material, the through hole **3** can also be closed on the side, i.e. not have a side passage for the insertion of the tube **T**.

In practice, the supporting body **2** is intended to be positioned orthogonally with respect to the tube **T,** which crosses it from side to side.

A plurality of optical sensors, and in particular at least one thickness measure sensor **4,** is housed inside the supporting body **2,** for measuring the thickness **WT1, WT2** of at least one of the tube walls at a cross-section thereof and at least one diameter measure sensor **5, 5'** for measuring the outer diameter **D** of the tube at a cross-section thereof.

Preferably, there are at least two thickness measure sensors **4** mounted on opposite sides of the supporting body with respect to the tube and aligned with one another so that a first thickness measure sensor measures a first thickness **WT1** of the tube and a second thickness measure sensor measures a second thickness **WT2** of the tube, at the same cross-section along which the outer diameter **D** of the tube **T** is measured by the at least one diameter measure sensor.

To ensure a direct measuring of the inner diameter, the thickness and diameter measure sensors are superimposed in space, i.e. are respectively arranged so that to measure the same tube section, and in time, i.e. at the same instant. In other words, the thicknesses of the tube walls **WT1, WT2** are measured at a same diameter **D** which is measured by the corresponding diameter measure sensor and such measures are measured contemporaneously.

Advantageously, each thickness measure sensor **4** is a reflection optical sensor and comprises an emitter **6** of incident light radiation and a receiver of reflected light radiation 7, to receive the light radiations reflected especially by the inner **8** and outer **9** walls of the tube **T**.

Preferably, the thickness measure sensors are interferometric optical sensors of the type adapted to measure the thickness of the tube wall since they are not very sensitive to vibrations, thus allowing to accurately measure the thickness despite the tube is moving. In fact, it is possible to use such type of sensors since each of them must measure the thickness of one tube wall only, whereas the measurement of the other wall is carried out with another sensor of the same type, thus overcoming the limits of the interferometric multilayer sensors described above.

The diameter measure sensors, used for measuring the outer diameter of the tube, are preferably shadow projection sensors, such as laser gauges or gauges with telecentric optics. In both cases, the measure of the outer diameter obtained is the one along the axis between the two thickness sensors. Such types of sensors are perfect for the present application, since they have a transmitter element **5,** i.e. a light source, and a separate receiver element **5'** which ensure maximum accuracy. Specifically, the tube, struck by the light emitted by the transmitter element, projects its shadow on the receiver element. By analyzing such shadow, it is possible to determine the measure of the outer diameter of the tube.

The two types of optical sensors can be electronically synchronized to ensure the acquisition, and thus the measurement, are carried out exactly at the same instant.

Under these conditions, the inner diameter **d** is obtained by means of the following calculation:

$$d = D - (WT1 + WT2)$$

Since the measurements are carried out contemporaneously and on the same tube section, the value thus obtained effectively represents the inner diameter **d** of the tube along the axis connecting the two thickness measure sensors **4**.

In the event of a single thickness measure sensor able to measure a single thickness, the measure of the second thickness **WT2** would be considered equal to that of the single thickness **WT1** measured. Obviously, such a measure is less accurate than the preceding one and can thus be used for tubes with wider tolerances as far as the measuring of their inner diameter is concerned.

The supporting body **2**, on which or in which the thickness measure sensors **4** and diameter measure sensors **5, 5'** are fixed, ensure that the measures are on the same axis orthogonal to the geometric axis **X** of the tube.

Since the tube is moved longitudinally, by repeating the measurement at preset time intervals it is possible to detect the diameter at different sections of the tube itself. Since the tube can also be produced at a speed of 3 meters per second in a production line and the shearing length is normally in the order of 1 - 2 meters, a measurement is preferably carried out every 1 - 15 milliseconds, so that to repeat the measurement at least each 45 millimeters of tube. Preferably, a measurement is carried out every 10 milliseconds at the most and even more preferably every 5 milliseconds at the most in order to measure the tube at intervals of 15 millimeters at the most.

Preferably, a couple of thickness measure sensors **4** and a diameter measure sensor **5, 5'** are combined with a same body, so that to carry out diameter measures at a single transverse axis of the tube. As an alternative, there could be two or more couples of thickness measure sensors **4,** each of which combined with a respective diameter measure sensor **5, 5'**, in order to be able to measure the diameter at different transverse axes of the tube.

Advantageously, however, in order to be able to have a body open on a side, useful for removing the measuring device from the production line or when inserted on the production line, or in case of breakage to the tube itself, and to not have too many components in the same body, it is preferable to have only one couple of thickness measure sensors and a diameter measure sensor for each supporting body and to mount a plurality of supporting bodies aligned in the longitudinal direction of the tube and angularly shifted from one another with respect to the axis **X** of the tube so that to carry out measures on several axis.

All these optical heads, which are three in the example shown in the figures but which could be of a greater number and combined with one or more different containing bodies, are connected, preferably with optical fibers, with external means for analyzing the light radiation detected by the receivers, typically a dedicated electronic microcontroller device with program means comprising for example a firmware for analyzing the signals. The firmware can be programmable to execute an algorithm necessary for analyzing the coming out light radiation by interferometric methodologies and to calculate the thicknesses **WT1** and **WT2** of the tube **T** comprised between the respective inner surface and the respective outer surface, depending on the characteristics of interference between the first light radiation reflected by the outer surface of the tube **T** and the second light radiation reflected by the inner surface of the tube **T** and the outer diameter **D** and to calculate the value of the inner diameter **d** as the difference between the outer diameter and the thicknesses of at least one, but preferably both tube walls.

Such analyzing means further comprise storing means to store the thicknesses and diameters as they are detected and possible displaying means to show the detected values and/or a graph representative of the diameter and/or inner profile of the tube. Moreover, the program means are prearranged to compare the detected values with set threshold values in order to determine any non-compliance of the tube or tube lengths. The measuring apparatus can comprise visual and/or acoustic signaling means to highlight a non-compliance situation and/or means to feedback connect to the production line in order to activate an alarm signal in case of non-compliance and/or to vary the operative parameters of the production line and/or to cause the discarding of the non-compliant tube length.

The operation of the apparatus **1** is the following. The supporting body **2** or each supporting body, if more than one, is positioned so that to make the axis of the hole **3** coincide with the axis **X** of the tube **T** coming from the production line and to arrange it with the proper angle with respect to the others, when there are more supporting bodies for detecting the measure of the inner diameter at several tube sections.

The optical heads **4** and **5, 5',** simultaneously and at preset frequency, detect respectively the measure of at least one thickness, preferably of two thicknesses **WT1** and **WT2** of two opposite walls of the tube at a same outer diameter **D** and the measure of said outer diameter **D.**

The signals provided by the optical heads **4** and **5, 5'** are analyzed and, in particular, processed to detect the inner diameter **d** of the moving tube **T,** on a plurality of points depending on the selected frequency of detection.

Specifically, the signals are processed by performing out the following calculation:

$$d = D - (WT1 + WT2)$$

wherein **WT1** and **WT2** are preferably both detected by means of a respective thickness measure sensor.

**Claims**

1. An apparatus (1) of measuring the inner diameter (d) of a tube (T), the apparatus comprising at least one thickness measure sensor (4) of the optical type that is combined with a supporting body (2), and analyzing means provided with program means for calculating the thickness (WT1, WT2) of the tube at least at one portion of the tube (T), **characterized in that** it comprises one or more diameter measure sensors (5, 5') for measuring the outer diameter (D) of the tube (T), each combined with the supporting body, wherein the apparatus comprises means for translating the tube in a longitudinal direction coincident or substantially parallel to its geometric axis (X), or for translating at least said thickness measure sensors and diameter measure sensors in said longitudinal direction coincident or substantially parallel to the geometric axis (X) of the tube (T), wherein said one or more diameter measure sensors (4) and the at least one thickness measure sensor are constrained to the supporting body (2) so that to be radially oriented with respect to the geometric axis (X) of the tube (T) and so that the at least one thickness measure sensor measures the thickness (WT1, WT2) of a tube section belonging to the outer diameter (D) of the tube detected by one of said one or more diameter measure sensors, wherein the at least one thickness measure sensor and the respective diameter measure sensor are synchronized for measuring simultaneously and wherein the program means are prearranged to calculate the inner diameter (d) as the difference between the outer diameter and the thickness of the tube which are detected by said diameter and thickness measure sensors.

2. Apparatus (1) according to claim 1, wherein two respective thickness measure sensors (4) are prearranged for each diameter measure sensor (5, 5') and combined with the supporting body so that each thickness measure sensor measures the thickness (WT1, WT2) of a respective tube section belonging to the outer diameter (D) of the tube, which is detected by said diameter measure sensor and wherein the inner diameter (d) is calculated through the formula

$$d = D - (WT1 + WT2).$$

3. Apparatus (1) according to claim 1 or 2, comprising means for causing an at least partial rotation of the tube.

4. Apparatus (1) according to claim 1, 2 or 3, wherein the supporting body (2) is provided with a hole, or a through opening, (3) intended to accommodate the moving tube (T) therein, and wherein the supporting body can be combined with a frame in order to be positioned so that the axis of the through hole coincides with the geometric axis (X) of the tube (T).

5. Apparatus (1) according to claim 4, wherein the supporting body is open on one side and wherein a diameter measure sensor and two respective thickness measure sensors mounted on opposite parts with respect to the tube and aligned with each other along the axis comprising the outer diameter (D) to be measured by means of the diameter measure sensor, are combined with the supporting body.

6. Apparatus (1) according to one of claims 1-5, wherein each of the thickness measure sensor is an optical sensor of the interferometric type and comprises an emitter (6) to emit a light radiation source and a receiver (7) to collect the light radiation coming out of the tube and resulting from the radiation reflected from the inner wall (8) and from the outer wall (9) of the tube (T), wherein said means for calculating the thickness (WT1, WT2) of the tube are prearranged to analyze the coming out light radiation by interferometric methods and wherein each diameter measure sensor (5, 5') is a shadow projection sensor selected between laser gauges, gauges with telecentric optics and the like, which comprises a transmitter element (5) with a light source and a receiver element (5') arranged on the opposite part of the supporting body with respect to the tube, in order to determine the outer diameter of the tube depending on the shadow projected by the tube when struck with the light emitted by the transmitter element (5).

7. Apparatus (1) according to one of claims 1-6, wherein the analyzing means comprise storing means to store the values of the thicknesses and outer diameters detected and of the inner diameters calculated and possibly displaying means to show said values and/or graphs representative of the inner diameter and/or profile of the tube.

8. Apparatus (1) according to claim 7, wherein the program means are prearranged to compare the detected values with set threshold values in order to determine any non-compliance of the tube or tube lengths and wherein the measure apparatus can comprise visual and/or acoustic signaling means to highlight a non-compliance situation and/or means to feedback connect to a production line in order to stop it in case of non-compliance and/or to change the operating parameters of the production line.

9. A method of measuring the inner diameter (d) of a tube (T), comprising:

a) prearranging at least one thickness measure sensor (4) of the optical type and at least one respective diameter measure sensor (5, 5') around the tube (T);
b) translating the tube in a longitudinal direction coincident or substantially parallel to its geometric axis (X), or translating at least said thickness measure sensors and diameter measure sensors with respect to the tube in said longitudinal direction;
c) measuring the outer diameter (D) of the tube at one of its sections by means of the at least one diameter measure sensor;
d) contemporaneously measuring the thickness (WT1, WT2) of the tube at least at a tube portion belonging to the outer diameter (D) of the tube measured in point c) by means of the at least one of said thickness measure sensor;
e) calculating the inner diameter (d) of the tube as the difference between the outer diameter and the thickness of the tube.

10. Method of measuring according to claim 9, wherein two respective thickness measure sensors are prearranged on parts of the tube opposite one with respect to the other for each diameter measure sensor, in order to measure the two thicknesses (WT1, WT2) of the tube wall at the outer diameter (D) of the tube and wherein the point e) is carried out through the following formula:

$$d = D - (WT1 + WT2)$$

and wherein two or more diameter measure sensors, with each of which two respective thickness measure sensors are combined, can be prearranged around the tube.

11. Method according to claim 9 or 10, wherein a step of rotating the tube at least partially is provided for measuring the outer diameter (D) and contemporaneously by means of the thickness (WT1, WT2) of the tube at least at a tube portion belonging to the outer diameter (D) of the tube at a plurality of different diameters of a same tube section.

12. Method according to claim 9, 10 or 11, wherein each thickness measure sensor is an optical sensor of the interferometric type, comprising an emitter (6) to emit a light radiation source and a receiver (7) to collect the light radiation coming out of the tube and resulting from the radiation reflected from the inner wall (8) and from the outer wall (9) of the tube (T), wherein each diameter measure sensor (5, 5') is a shadow proj ection sensor selected between laser gauges, gauges with telecentric optics and the like, which comprises a transmitter element (5) with a light source and a receiver element (5') arranged on the opposite part of the tube with respect to the transmitter element, and wherein step b) is carried out by analyzing means to analyze the coming out light radiation by interferometric methods and step a) is carried out by analyzing the shadow projected onto the receiver element by the tube when struck with the light emitted by the transmitter element (5).

13. Method according to one of claims 9-12, comprising the further step f) of comparing the values of the inner diameter (d) detected with a predetermined frequency to set threshold values in order to determine any non-compliance of the tube or tube lengths and the possible additional steps of g) signaling non-compliance situations by means of a visual and/or acoustic alarm and/or h) feedback driving a production line to stop it and/or to change the operating parameters of the process, in case of non-compliance and/or activating the means adapted to reject the non-compliant tube or tube portion.

14. Use of the apparatus according to any one of claims 1-8 to determine the measure of the inner diameter (d) of tubes (T) made of glass or a plastic material, transparent or semi-transparent to light radiation.

**Patentansprüche**

1. Vorrichtung (1) zum Messen des Innendurchmessers (d) eines Rohrs (T), wobei die Vorrichtung mindestens einen mit einem Tragkörper (2) kombinierten Dickenmesssensor (4) des optischen Typs und Analysemittel umfasst, die mit Programmmitteln zum Berechnen der Dicke (WT1, WT2) des Rohrs an mindestens einem Abschnitt des Rohrs (T) versehen sind, **gekennzeichnet durch** einen oder mehrere jeweils mit dem Tragkörper kombinierte Durchmessermesssensoren (5, 5') zum Messen des Außendurchmessers (D) des Rohrs (T), wobei die Vorrichtung Mittel zum Verfahren des Rohrs in einer Längsrichtung, die mit seiner geometrischen Achse (X) übereinstimmt oder im Wesentlichen parallel dazu verläuft, oder zum Verfahren zumindest der Dickenmesssensoren und der Durchmessermesssensoren in der genannten Längsrichtung, die mit der geometrischen Achse (X) des Rohrs (T) übereinstimmt oder im Wesentlichen parallel dazu verläuft, umfasst, wobei der eine oder die mehreren Durchmessermesssensoren (5, 5') und der mindestens eine Dickenmesssensor so an dem Tragkörper (2) befestigt sind, dass sie in Bezug auf die geometrische Achse (X) des Rohrs (T) radial ausgerichtet sind und dass der mindestens eine Dickenmesssensor die Dicke (WT1, WT2) eines Rohrabschnitts misst, der zu dem von einem der einen oder mehreren Durchmessermesssensoren erfassten Außendurchmesser (D) des Rohrs gehört, wobei der mindestens eine Dickenmesssensor und der jeweilige Durchmessermesssensor synchronisiert sind, um eine gleichzeitige Messung durchzuführen, und wobei die Programmmittel so voreingestellt sind, dass sie den Innendurchmesser (d) als die Differenz zwischen dem von den Durchmesser- und Dickenmesssensoren erfassten Außendurchmesser und der Dicke des Rohrs berechnen.

2. Vorrichtung (1) nach Anspruch 1, wobei für jeden Durchmessermesssensor (5, 5') jeweils zwei Dickenmesssensoren (4) vorgesehen und mit dem Tragkörper so kombiniert sind, dass jeder Dickenmesssensor die Dicke (WT1, WT2) eines jeweiligen Rohrabschnitts misst, der zu dem vom Durchmessermesssensor erfassten Außendurchmesser (D) des Rohrs gehört, und wobei der Innendurchmesser (d) nach folgender Formel berechnet wird

$$d = D - (WT1 + WT2).$$

3. Vorrichtung (1) nach Anspruch 1 oder 2, umfassend Mittel zum Bewirken einer zumindest teilweisen Drehung des Rohrs.

4. Vorrichtung (1) nach Anspruch 1, 2 oder 3, wobei der Tragkörper (2) mit einem Loch oder einer Durchgangsöffnung (3) versehen ist, die dazu bestimmt ist, das bewegliche Rohr (T) darin aufzunehmen, und wobei der Tragkörper mit einem Rahmen kombiniert werden kann, um so positioniert zu werden, dass die Achse des Durchgangslochs mit der geometrischen Achse (X) des Rohrs (T) übereinstimmt.

5. Vorrichtung (1) nach Anspruch 4, wobei der Tragkörper an einer Seite offen ist und wobei ein Durchmessermesssensor und zwei jeweilige Dickenmesssensoren, die an gegenüberliegenden Stellen in Bezug auf das Rohr angebracht und entlang der den mittels des Durchmessermesssensors zu messenden Außendurchmesser (D) umfassenden Achse zueinander ausgerichtet sind, mit dem Tragkörper kombiniert sind.

6. Vorrichtung (1) nach einem der Ansprüche 1-5, wobei jeder der Dickenmesssensoren ein optischer Sensor vom interferometrischen Typ ist und einen Emitter (6) zum Aussenden einer Lichtstrahlungsquelle und einen Empfänger (7) zum Aufnehmen der aus dem Rohr austretenden und aus der von der Innenwand (8) und von der Außenwand (9) des Rohrs (T) reflektierten Strahlung resultierenden Lichtstrahlung umfasst, wobei die Mittel zur Berechnung der Dicke (WT1, WT2) des Rohrs zur Analyse der austretenden Lichtstrahlung durch interferometrische Verfahren eingerichtet sind und wobei jeder Durchmessermesssensor (5, 5') ein Schattenprojektionssensor ist, ausgewählt aus Laserlehren, Lehren mit telezentrischer Optik und dergleichen, der ein Sendeelement (5) mit einer Lichtquelle und ein Empfängerelement (5') umfasst, das auf der gegenüberliegenden Stelle des Tragkörpers in Bezug auf das Rohr angeordnet ist, um den Außendurchmesser des Rohrs in Abhängigkeit von dem Schatten zu bestimmen, der von dem Rohr projiziert wird, wenn es mit dem von dem Sendeelement (5) emittierten Licht beaufschlagt wird.

7. Vorrichtung (1) nach einem der Ansprüche 1 bis 6, wobei die Analysemittel Speichermittel zum Speichern der Werte der erfassten Dicken und Außendurchmesser und der berechneten Innendurchmesser und möglicherweise Anzeigemittel zum Anzeigen der Werte und/oder Grafiken, die für den Innendurchmesser und/oder das Profil des Rohrs repräsentativ sind, umfassen.

8. Vorrichtung (1) nach Anspruch 7, wobei die Programmmittel so eingerichtet sind, dass sie die erfassten Werte mit eingestellten Schwellenwerten vergleichen, um eine Nichtkonformität des Rohrs oder der Rohrlängen zu bestimmen, und wobei die Messvorrichtung visuelle und/oder akustische Signalisierungsmittel umfassen kann, um eine Situation der Nichtkonformität hervorzuheben, und/oder Mittel zur Rückkopplung mit einer Produktionslinie, um diese im Falle der Nichtkonformität anzuhalten und/oder die Betriebsparameter der Produktionslinie zu ändern.

9. Verfahren zum Messen des Innendurchmessers (d) eines Rohres (T), umfassend:

a) Bereitstellen von mindestens einem Dickenmesssensor (4) vom optischen Typ und mindestens einem entsprechenden Durchmessermesssensor (5, 5') um das Rohr (T) herum;
b) Verfahren des Rohrs in einer Längsrichtung, die mit seiner geometrischen Achse (X) übereinstimmt oder im Wesentlichen parallel dazu verläuft, oder Verfahren zumindest der Dickenmesssensoren und der Durchmessermesssensoren in Bezug auf das Rohr in der genannten Längsrichtung;
c) Messen des Außendurchmessers (D) des Rohres an einem seiner Abschnitte mit Hilfe des mindestens einen Durchmessermesssensors;
d) gleichzeitiges Messen der Dicke (WT1, WT2) des Rohrs zumindest an einem Rohrabschnitt, der zu dem in Punkt c) gemessenen Außendurchmesser (D) des Rohrs gehört, mit Hilfe des mindestens einen Dickenmesssensors;
e) Berechnen des Innendurchmessers (d) des Rohrs als Differenz zwischen dem Außendurchmesser und der Dicke des Rohrs.

10. Messverfahren nach Anspruch 9, wobei für jeden Durchmessermesssensor zwei jeweilige Dickenmesssensoren an gegenüberliegenden Stellen des Rohres bereitgestellt werden, um die beiden Dicken (WT1, WT2) der Rohrwand am Außendurchmesser (D) des Rohres zu messen und wobei der Punkt e) durch die folgende Formel ausgeführt wird:

$$d = D - (WT1 + WT2)$$

und wobei zwei oder mehr Durchmessermesssensoren, denen jeweils zwei Dickenmesssensoren zugeordnet sind, um das Rohr herum angeordnet werden können.

11. Verfahren nach Anspruch 9 oder 10, wobei ein Schritt der zumindest teilweisen Rotation des Rohres zur Messung des Außendurchmessers (D) und gleichzeitig mittels der Dicke (WT1, WT2) des Rohres zumindest an einem zum Außendurchmesser (D) des Rohres gehörenden Rohrabschnitt bei mehreren unterschiedlichen Durchmessern eines gleichen Rohrabschnittes vorgesehen ist.

12. Verfahren nach Anspruch 9, 10 oder 11, wobei jeder Dickenmesssensor ein optischer Sensor vom interferometrischen Typ ist, der einen Emitter (6) zum Aussenden einer Lichtstrahlungsquelle und einen Empfänger (7) zum Aufnehmen der Lichtstrahlung umfasst, die aus dem Rohr kommt und aus der von der Innenwand (8) und der Außenwand (9) des Rohrs (T) reflektierten Strahlung resultiert, wobei jeder Durchmessermesssensor (5, 5') ein Schattenprojektionssensor ist, ausgewählt aus Laser-Lehren, Lehren mit telezentrischer Optik und dergleichen, der ein Sendeelement (5) mit einer Lichtquelle und ein Empfängerelement (5') umfasst, das auf der gegenüberliegenden Stelle des Rohrs in Bezug auf das Sendeelement angeordnet ist, und wobei Schritt b) durch Analysemittel ausgeführt wird, um die austretende Lichtstrahlung durch interferometrische Methoden zu analysieren, und Schritt a) durch Analysieren des von dem Rohr auf das Empfängerelement projizierten Schattens ausgeführt wird, wenn es mit dem von dem Sendeelement (5) emittierten Licht beaufschlagt wird.

13. Verfahren nach einem der Ansprüche 9-12, umfassend den weiteren Schritt f) des Vergleichens der mit einer vorbestimmten Frequenz ermittelten Werte des Innendurchmessers (d) mit festgelegten Schwellenwerten, um eine Nichtkonformität des Rohrs oder der Rohrlängen zu bestimmen, und die möglichen zusätzlichen Schritte g) des Signalisierens von Nichtkonformitätssituationen mittels eines visuellen und/oder akustischen Alarms und/oder h) des Ansteuerns durch Rückkopplung einer Produktionslinie, um diese anzuhalten und/oder die Betriebsparameter des Prozesses zu ändern, im Falle einer Nichtkonformität und/oder des Aktivierens der Mittel, die geeignet sind, das nichtkonforme Rohr oder den nichtkonformen Rohrabschnitt zu verwerfen.

14. Verwendung der Vorrichtung nach einem der Ansprüche 1 bis 8 zur Bestimmung des Maßes des Innendurchmessers (d) von Rohren (T) aus Glas oder Kunststoff, die für Lichtstrahlung transparent oder halbtransparent sind.

**Revendications**

1. Un appareil (1) pour mesurer le diamètre intérieur (d) d'un tube (T), l'appareil comprenant au moins un capteur (4) de mesure d'épaisseur du type optique qui est associé à un corps de support (2), et des moyens d'analyse munis de moyens de programme pour calculer l'épaisseur (WT1, WT2) du tube au moins au niveau d'une partie du tube (T), **caractérisé en ce qu'**il comprend un ou plusieurs capteurs (5, 5') de mesure de diamètre pour mesurer le diamètre extérieur (D) du tube (T), chacun associé au corps de support, où l'appareil comprend des moyens de translation du tube dans une direction longitudinale coïncidant ou sensiblement parallèle à son axe géométrique (X), ou de translation d'au moins lesdits capteurs de mesure d'épaisseur et capteurs de mesure de diamètre dans ladite direction longitudinale coïncidant ou sensiblement parallèle à l'axe géométrique (X) du tube (T), où lesdits un ou plusieurs capteurs (5, 5') de mesure de diamètre et le au moins un capteur de mesure d'épaisseur sont contraints au corps de support (2) de manière à être orientés radialement par rapport à l'axe géométrique (X) du tube (T) et de sorte que le au moins un capteur de mesure d'épaisseur mesure l'épaisseur (WT1, WT2) d'une section de tube appartenant au diamètre extérieur (D) du tube détecté par l'un desdits un ou plusieurs capteurs de mesure de diamètre, où le au moins un capteur de mesure d'épaisseur et le capteur de mesure de diamètre respectif sont synchronisés pour mesurer simultanément et dans lequel les moyens de programme sont préparés pour calculer le diamètre intérieur (d) comme la différence entre le diamètre extérieur et l'épaisseur du tube qui sont détectés par lesdits capteurs de mesure de diamètre et d'épaisseur.

**2.** Appareil (1) selon la revendication 1, dans lequel pour chaque capteur (5, 5') de mesure de diamètre sont prévues deux capteurs (4) de mesure d'épaisseur respectifs associés au corps de support de sorte que chaque capteur de mesure d'épaisseur mesure l'épaisseur (WT1, WT2) d'une section de tube respective appartenant au diamètre extérieur (D) du tube, qui est détecté par ledit capteur de mesure de diamètre et où le diamètre intérieur (d) est calculé par la formule suivante

$$d = D - (WT1 + WT2).$$

**3.** Appareil (1) selon la revendication 1 ou 2, comprenant des moyens pour provoquer une rotation au moins partielle du tube.

**4.** Appareil (1) selon la revendication 1, 2 ou 3, dans lequel le corps de support (2) est pourvu d'un trou, ou d'une ouverture traversante, (3) destiné à accueillir à l'intérieur le tube (T) en mouvement, et dans lequel le corps de support peut être associé à un cadre afin d'être positionné de telle sorte que l'axe du trou traversant coïncide avec l'axe géométrique (X) du tube (T).

**5.** Appareil (1) selon la revendication 4, dans lequel le corps de support est ouvert sur un côté et dans lequel un capteur de mesure de diamètre et deux capteurs de mesure d'épaisseur respectifs montés sur des parties opposées par rapport au tube et alignés l'un avec l'autre le long de l'axe comprenant le diamètre extérieur (D) à mesurer au moyen du capteur de mesure de diamètre, sont associés au corps de support.

**6.** Appareil (1) selon une des revendications 1-5, dans lequel chacun des capteurs de mesure d'épaisseur est un capteur optique du type interférométrique et comprend un émetteur (6) pour émettre une source de rayonnement lumineux et un récepteur (7) pour collecter le rayonnement lumineux sortant du tube et résultant du rayonnement réfléchi par la paroi intérieur (8) et par la paroi extérieur (9) du tube (T), où lesdits moyens de calcul de l'épaisseur (WT1, WT2) du tube sont préparés pour analyser le rayonnement lumineux sortant par des méthodes interférométriques et dans lequel chaque capteur (5, 5') de mesure de diamètre est un capteur à projection d'ombre choisi entre jauges laser, jauges à optique télécentrique et similaires, qui comprend un élément émetteur (5) avec une source de lumière et un élément récepteur (5') disposé sur la partie opposée du corps de support par rapport au tube, afin de déterminer le diamètre extérieur du tube en fonction de l'ombre projetée par le tube lorsqu'il est frappé par la lumière émis par l'élément émetteur (5).

**7.** Appareil (1) selon l'une des revendications 1-6, dans lequel les moyens d'analyse comprennent des moyens de stockage pour stocker les valeurs des épaisseurs et des diamètres extérieurs détectées et des diamètres intérieurs calculées et éventuellement des moyens d'affichage pour montrer lesdits valeurs et/ou graphiques représentatifs du diamètre intérieur et/ou du profil du tube.

**8.** Appareil (1) selon la revendication 7, dans lequel les moyens de programme sont préparés pour comparer les valeurs détectées à des valeurs seuils fixées afin de déterminer toute non-conformité du tube ou des longueurs de tube et où l'appareil de mesure peut comprendre des moyens de signalisation visuels et/ou acoustiques pour mettre en évidence une situation de non-conformité et/ou des moyens de connexion en retour à une chaîne de production afin de l'arrêter en cas de non-conformité et/ou de modifier les paramètres de fonctionnement de la chaîne de production.

**9.** Une méthode de mesure du diamètre intérieur (d) d'un tube (T), comprenant:

a) prévoir autour du tube (T) au moins un capteur (4) de mesure d'épaisseur du type optique et au moins un capteur (5, 5') de mesure de diamètre respectif;
b) translater le tube dans une direction longitudinale coïncidant avec son axe géométrique (X) ou sensiblement parallèle à celui-ci, ou translater au moins lesdits capteurs de mesure d'épaisseur et capteurs de mesure de diamètre par rapport au tube dans ladite direction longitudinale;
c) mesurer le diamètre extérieur (D) du tube au niveau d'une de ses sections au moyen d'au moins un capteur de mesure de diamètre;
d) mesurer simultanément l'épaisseur (WT1, WT2) du tube au moins au niveau d'une partie du tube appartenant au diamètre extérieur (D) du tube mesuré au point c) au moyen d'au moins un desdits capteurs de mesure d'épaisseur;
e) calculer le diamètre intérieur (d) du tube comme la différence entre le diamètre extérieur et l'épaisseur du tube.

**10.** Méthode de mesure selon la revendication 9, dans laquelle, pour chaque capteur de mesure de diamètre, sont prévues deux capteurs de mesure d'épaisseur respectifs sur des parties du tube opposées l'une par rapport à l'autre, afin de mesurer les deux épaisseurs (WT1, WT2) de la paroi du tube au niveau du diamètre extérieur (D) du tube et dans laquelle le point e) est réalisé par la formule suivante:

$$d = D - (WT1 + WT2)$$

et dans laquelle deux ou plusieurs capteurs de mesure de diamètre peuvent être prévues autour du tube, chacun d'entre eux étant associé à deux capteurs de mesure d'épaisseur respectifs.

11. Méthode selon la revendication 9 ou 10, dans laquelle est prévue une étape de rotation au moins partielle du tube pour mesurer le diamètre extérieur (D) et simultanément, au moyen de l'épaisseur (WT1, WT2) du tube, au moins au niveau d'une partie du tube appartenant au diamètre extérieur (D) du tube au niveau d'une pluralité de diamètres différents d'une même section de tube.

12. Méthode selon la revendication 9, 10 ou 11, dans laquelle chaque capteur de mesure d'épaisseur est un capteur optique de type interférométrique, comprenant un émetteur (6) pour émettre une source de rayonnement lumineux et un récepteur (7) pour collecter le rayonnement lumineux sortant du tube et résultant du rayonnement réfléchi par la paroi intérieur (8) et par la paroi extérieur (9) du tube (T), dans lequel chaque capteur (5, 5') de mesure de diamètre est un capteur à projection d'ombre choisi parmi les jauges à laser, les jauges à optique télécentrique et similaires, qui comprend un élément émetteur (5) avec une source de lumière et un élément récepteur (5') disposé sur la partie opposée du tube par rapport à l'élément émetteur, et dans laquelle l'étape b) est réalisée par des moyens d'analyse pour analyser le rayonnement lumineux sortant par des méthodes interférométriques et l'étape a) est réalisée en analysant l'ombre projetée sur l'élément récepteur par le tube lorsqu'il est frappé par la lumière émise par l'élément émetteur (5).

13. Méthode selon l'une des revendications 9-12, comprenant l'étape supplémentaire de f) comparer les valeurs du diamètre intérieur (d) détectées avec une fréquence prédéterminée à des valeurs seuils fixées afin de déterminer toute non-conformité du tube ou des longueurs de tube et les éventuelles étapes supplémentaires de g) signaler les situations de non-conformité au moyen d'une alarme visuelle et/ou sonore et/ou h) piloter en retour une ligne de production pour l'arrêter et/ou pour modifier les paramètres de fonctionnement du procédé, en cas de non-conformité et/ou activer les moyens adaptés pour rejeter le tube ou la portion de tube non-conforme.

14. Utilisation de l'appareil selon l'une quelconque des revendications 1-8 pour déterminer la mesure du diamètre intérieur (d) de tubes (T) en verre ou en matière plastique, transparents ou semi-transparents au rayonnement lumineux.

STATE OF THE ART

FIG. 1

FIG. 2

FIG. 3

**EP 4 007 887 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019162524 A
- US 2015204654 A
- JP 2000171231 A